(19) Europäisches Patentamt
European Patent Office
Office européen des brevets

(11) EP 4 155 344 A1

(12) # EUROPEAN PATENT APPLICATION
published in accordance with Art. 153(4) EPC

(43) Date of publication:
**29.03.2023 Bulletin 2023/13**

(21) Application number: **21808652.8**

(22) Date of filing: **20.05.2021**

(51) International Patent Classification (IPC):
***C08K 5/09** (2006.01)* ***C08L 1/26** (2006.01)*
***H01M 4/62** (2006.01)*

(52) Cooperative Patent Classification (CPC):
**C08K 5/09; C08L 1/26; H01M 4/62;** Y02E 60/10

(86) International application number:
**PCT/JP2021/019102**

(87) International publication number:
**WO 2021/235511 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2020 JP 2020089612**
**12.04.2021 JP 2021066883**

(71) Applicant: **Nippon Paper Industries Co., Ltd.**
**Tokyo 114-0002 (JP)**

(72) Inventors:
- **SAKAJIRI, Takayuki**
**Tokyo 114-0002 (JP)**
- **NISHIDE, Daisuke**
**Tokyo 114-0002 (JP)**
- **INOUE, Kazuhiko**
**Tokyo 114-0002 (JP)**
- **YAMAMOTO, Kodai**
**Tokyo 114-0002 (JP)**
- **ITO, Mikiya**
**Tokyo 114-0002 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **BINDER FOR NON-AQUEOUS ELECTROLYTE SECONDARY BATTERY ELECTRODES, AQUOEUS SOLUTION, ELECTRODE COMPOSITION FOR NONAQUEOUS ELECTROLYTE SECONDARY BATTERIES, AND ELECTRODE FOR NONAQUEOUS ELECTROLYTE SECONDARY BATTERIES**

(57) Component A: a carboxymethyl cellulose having a degree of carboxymethyl substitution per anhydroglucose unit of 0.45 or more or a salt thereof and Component B: a saturated carboxylic acid having 6 or less carbon atoms or a salt thereof are contained.

EP 4 155 344 A1

## Description

Technical Field

The present invention relates to a binder for non-aqueous electrolyte secondary battery electrodes, an aqueous solution, an electrode composition for non-aqueous electrolyte secondary batteries, and an electrode for non-aqueous electrolyte secondary batteries.

Background Art

In recent years, electronic devices, especially portable devices such as mobile phones, personal digital assistants (PDA), and notebook personal computers have been reduced in size, weight, thickness, and performance, and portable devices have become widespread. With the diversification of use ranges of such portable devices, batteries for driving these portable devices have become very important components. Among batteries, non-aqueous electrolyte secondary batteries typified by lithium ion secondary batteries, which have high energy density and high capacity, are widely used.

A non-aqueous electrolyte secondary battery is typically produced as follows. That is, a negative electrode containing a negative electrode active material made of a carbon material or the like capable of occluding and releasing lithium ions, and a positive electrode containing a positive electrode active material made of a lithium-containing transition metal composite oxide (for example, $LiCoO_2$, $LiNiO_2$, $LiMn_2O_4$, and the like) are each formed in a sheet shape on a surface of a metal foil as a current collecting substrate (current collector) to obtain a sheet-shaped positive electrode and a sheet-shaped negative electrode. Then, the sheet-shaped positive electrode and the sheet-shaped negative electrode are wound or stacked with a separator also formed in a sheet shape interposed between them, and housed in a case. The sheet-shaped positive electrode and the sheet-shaped negative electrode have a structure including a metal foil serving as a current collecting substrate (current collector) and a mixture layer formed on a surface of the metal foil and containing an active material, and can be formed by applying a negative electrode active material slurry (or paste) or a positive electrode active material slurry (or paste) on a current collecting material and drying the slurry.

The negative electrode active material slurry (paste) contains a binder in addition to a negative electrode active material made of a carbon material or the like capable of occluding and releasing lithium ions. As the binder, a binder for a negative electrode containing styrene-butadiene latex (SBR) as a main component is disclosed in Patent Literature 1.

According to Patent Literature 1, carboxymethyl cellulose as a water-soluble thickener is dissolved in water to prepare an aqueous solution, and SBR and a negative electrode active material are mixed with the aqueous solution to produce a slurry. The slurry is applied onto a substrate as a coating liquid and dried, whereby a sheet-shaped negative electrode is formed.

On the other hand, in the production of a positive electrode of non-aqueous electrolyte secondary batteries, an organic solvent such as N-methyl-2-pyrrolidone (NMP) has been conventionally used as a solvent. However, in recent years, water has been used as a solvent due to a reduction in cost required for handling and an influence on environmental load at the time of discharge.

The positive electrode active material slurry (paste) contains a binder in addition to a lithium-containing transition metal composite oxide (for example, $LiCoO_2$, $LiNiO_2$, $LiMn_2O_4$, and the like) as a positive electrode active material, carbon as a conductive material, and the like. As the binder, a cellulose having a viscosity of 4000 mPa·s or more in a 1% aqueous solution, such as carboxymethyl cellulose, is described in Patent Literature 2. Patent Literature 2 describes that carboxymethyl cellulose is charged into pure water together with a conductive material, polytetrafluoroethylene (PTFE), and the like to prepare an active material paste.

Citation List

Patent Literature

Patent Literature 1: JP H5-74461 A
Patent Literature 2: JP 2003-157847 A

However, in both Patent Literature 1 and Patent Literature 2, there is a concern that an undissolved substance of carboxymethyl cellulose used as a binder remains in the slurry, and streak-like defects (streaks) are generated on the current collecting substrate coated with the slurry.

An object of the present invention is to obtain a binder for non-aqueous electrolyte secondary battery electrodes that can reduce generation of an undissolved substance of carboxymethyl cellulose and has excellent solubility of carboxymethyl cellulose. In addition to the above, an object of the present invention is to obtain a binder for non-aqueous electrolyte secondary battery electrodes that is excellent in coatability when added to an electrode composition and also excellent in coating film strength.

Summary of Invention

Solution to Problem

As a result of earnest efforts, the inventors of the present invention have found that the problems can be solved by the following (1) to (17).

That is, according to the present invention,

(1) A binder for non-aqueous electrolyte secondary battery electrodes, including:

Component A: a carboxymethyl cellulose having a degree of carboxymethyl substitution per anhydroglucose unit of 0.45 or more or a salt thereof; and
Component B: a saturated carboxylic acid having 6 or less carbon atoms or a salt thereof,

(2) The binder for non-aqueous electrolyte secondary battery electrodes according to (1), wherein Component B contains at least a saturated carboxylic acid lithium salt having 6 or less carbon atoms,
(3) The binder for non-aqueous electrolyte secondary battery electrodes according to (1) or (2), wherein Condition (I) shown below is satisfied:

Condition (I): when Component A is a carboxymethyl cellulose having a degree of carboxymethyl substitution of 0.45 or more and 1.0 or less or a salt thereof,
Component B is contained in a range of 1 to 100 parts by weight with respect to 100 parts by weight of Component A,

(4) The binder for non-aqueous electrolyte secondary battery electrodes according to (1) or (2), wherein Condition (II) shown below is satisfied:

Condition (II): when Component A is a carboxymethyl cellulose having a degree of carboxymethyl substitution of more than 1.0 or a salt thereof,
Component B is contained in a range of 1 to 200 parts by weight with respect to 100 parts by weight of Component A,

(5) The binder for non-aqueous electrolyte secondary battery electrodes according to any one of (1) to (4), wherein Component B is a hydroxylic acid lithium salt having 6 or less carbon atoms,
(6) The binder for non-aqueous electrolyte secondary battery electrodes according to any one of (1) to (5), wherein Component B contains at least citric acid lithium salt,
(7) The binder for non-aqueous electrolyte secondary battery electrodes according to any one of (1) to (6), wherein the carboxymethyl cellulose or a salt thereof has a volume cumulative 100% particle diameter of less than 100 um as measured by a laser diffraction/scattering particle size distribution meter using methanol as a dispersion medium,
(8) The binder for non-aqueous electrolyte secondary battery electrodes according to (1), wherein the carboxymethyl cellulose or a salt thereof has a viscosity of a 1 mass% aqueous solution measured at 25°C with a B-type viscosity diameter (30 rpm) of 1,000 to 20,000 mPa·s,
(9) The binder for non-aqueous electrolyte secondary battery electrodes according to (1) or (8), wherein the carboxymethyl cellulose or a salt thereof has a volume cumulative 100% particle diameter of less than 50 $\mu$m as measured with a laser diffraction/scattering particle size distribution meter using methanol as a dispersion medium,
(10) The binder for non-aqueous electrolyte secondary battery electrodes according to any one of (1), (8) and (9), wherein the saturated carboxylic acid or a salt thereof is contained in a range of 10 to 120 wt% with respect to the carboxymethyl cellulose or a salt thereof,
(11) The binder for non-aqueous electrolyte secondary battery electrodes according to any one of (1) to (10), wherein the carboxymethyl cellulose or a salt thereof has a ratio of a dry mass M to a dry mass m of less than 50 ppm, wherein the dry mass M is a dry mass of a residue on a filter after filtration measured when 2 liters of a 0.3 mass% aqueous solution of the carboxymethyl cellulose or a salt thereof having the dry mass m is prepared and filtered through a 250 mesh filter under a reduced pressure condition of -200 mmHg,

(12) The binder for non-aqueous electrolyte secondary battery electrodes according to any one of (1) to (11), wherein the carboxymethyl cellulose or a salt thereof is a mechanically pulverized product,
(13) An aqueous solution including the binder for non-aqueous electrolyte secondary battery electrodes according to any one of (1) to (12),
(14) The aqueous solution according to (13) having a pH in a range of 2 to 8,
(15) An electrode composition for non-aqueous electrolyte secondary batteries, including the aqueous solution according to (13) or (14),
(16) The electrode composition for non-aqueous electrolyte secondary batteries according to (15), including a silicon-based active material, and
(17) An electrode for non-aqueous electrolyte secondary batteries, including the electrode composition according to (15) or (16) are provided.

Advantageous Effects of Invention

According to the present invention, it is possible to obtain a binder for non-aqueous electrolyte secondary battery electrodes that can reduce generation of an undissolved substance of carboxymethyl cellulose and has excellent solubility of carboxymethyl cellulose. Further, according to the present invention, it is possible to obtain a binder for non-aqueous electrolyte secondary battery electrodes that is excellent in coatability when added to an electrode composition and also excellent in coating film strength.

Description of Embodiments

Hereinafter, a binder for non-aqueous electrolyte secondary battery electrodes (hereinafter, it may be referred to as "electrode binder") of the present invention will be described. The electrode binder of the present invention contains: Component A: a carboxymethyl cellulose having a degree of carboxymethyl substitution per anhydroglucose unit of 0.45 or more or a salt thereof; and Component B: a saturated carboxylic acid having 6 or less carbon atoms or a salt thereof.

<Component A: Carboxymethyl Cellulose or Salt Thereof>

In the present invention, the carboxymethyl cellulose or a salt thereof has a structure in which a hydroxyl group in a glucose residue constituting cellulose is substituted with a carboxymethyl ether group. The carboxymethyl cellulose may be in the form of a salt. Examples of the salt of carboxymethyl cellulose include metal salts such as carboxymethyl cellulose sodium salt.
In the present invention, cellulose means a polysaccharide having a structure in which D-glucopyranose (it is also simply referred to as "glucose residue" or "anhydroglucose") is linked by $\beta$,1-4 bonds. Cellulose is generally classified into natural cellulose, regenerated cellulose, fine cellulose, microcrystalline cellulose excluding an amorphous region, and the like in accordance with origin, production method, and the like.
Examples of the natural cellulose include bleached pulp and unbleached pulp (bleached wood pulp or unbleached wood pulp); linter, purified linter; and cellulose produced by microorganisms such as acetic acid bacteria. The raw material of the bleached pulp or unbleached pulp is not particularly limited, and examples thereof include wood, cotton, straw, and bamboo. The method for producing the bleached pulp or unbleached pulp is not particularly limited, and may be a mechanical method, a chemical method, or a method in which two are combined in the middle thereof. Examples of the bleached pulp or unbleached pulp classified by the production method include mechanical pulp, chemical pulp, crushed pulp, sulfite pulp, and kraft pulp. Further, dissolving pulp may be used instead of pulp for papermaking. Dissolving pulp is a chemically purified pulp, and is mainly used by being dissolved in chemicals, and becomes a main raw material for artificial fibers, cellophane, and the like.
Examples of the regenerated cellulose include one obtained by dissolving cellulose in any solvent such as a copper ammonia solution, a cellulose xanthate solution, or a morpholine derivative, and spinning the cellulose again.
Examples of the fine cellulose include one obtained by depolymerizing (for example, acid hydrolysis, alkaline hydrolysis, enzymatic decomposition, blasting treatment, vibration ball mill treatment, and the like) a cellulose-based material such as the natural cellulose or regenerated cellulose, and one obtained by mechanically treating the cellulose-based material.
It is important that the carboxymethyl cellulose or a salt thereof of the present invention has a degree of carboxymethyl substitution per anhydroglucose unit of 0.45 or more, and more preferably 0.5 or more. When the degree of carboxymethyl substitution is less than 0.45, there is a possibility that dissolution in water becomes insufficient.
In the present invention, the anhydroglucose unit means individual anhydroglucose (glucose residues) constituting cellulose. The degree of carboxymethyl substitution (also referred to as degree of etherification) refers to the proportion of those substituted with a carboxymethyl ether group ($-OCH_2COOH$) among the hydroxyl groups ($-OH$) in the glucose residues constituting cellulose. The degree of carboxymethyl substitution may be abbreviated as DS or CM-DS.

The upper limit of the degree of carboxymethyl substitution per anhydroglucose unit of the carboxymethyl cellulose or a salt thereof is preferably 2.0 or less, and more preferably 1.5 or less.

The degree of carboxymethyl substitution can be determined by measuring the amount of a base such as sodium hydroxide required for neutralizing carboxymethyl cellulose in a sample. In this case, when the carboxymethyl ether group of the carboxymethyl cellulose or a salt thereof is in the form of a salt, the carboxymethyl ether group is converted into carboxymethyl cellulose in advance before measurement. In the measurement, back titration using a base or an acid and an indicator such as phenolphthalein can be appropriately combined.

In the present invention, the carboxymethyl cellulose or a salt thereof preferably has a viscosity of a 1 mass% aqueous solution measured with a B-type viscometer (30 rpm) at 25°C of 1,000 to 20,000 mPa·s, more preferably 1,500 to 15,000 mPa·s, and still more preferably 2,000 to 10,000 mPa·s. When the viscosity is within the above range, it is difficult to cause sedimentation, and an electrode slurry having good coatability can be prepared, and therefore it is suitable for a non-aqueous electrolyte secondary battery.

The carboxymethyl cellulose or a salt thereof preferably has a ratio of a mass M to a mass m of less than 50 ppm, wherein the mass M is a dry mass of a residue on a filter when 2 liters of a 0.3 mass% aqueous solution of carboxymethyl cellulose or a salt thereof is entirely filtered through a 250 mesh filter under a reduced pressure condition of -200 mmHg, and the mass m is a mass of the carboxymethyl cellulose or a salt thereof dissolved in the aqueous solution. When the ratio is 50 ppm or more, when an electrode is formed using the carboxymethyl cellulose or a salt thereof, external appearance defects such as streaks and pinholes may occur in the electrode, and the quality of a battery may deteriorate. The lower limit of the ratio of the mass M to the mass m is not particularly limited, and the smaller the ratio, the better.

In the present invention, the method for producing the carboxymethyl cellulose or a salt thereof is not limited, and a known method for producing carboxymethyl cellulose or a salt thereof can be applied. That is, the carboxymethyl cellulose or a salt thereof of the present invention can be produced by treating cellulose as a raw material with a mercerizing agent (alkali) to prepare mercerized cellulose (alkali cellulose), and then adding an etherification agent to the mercerized cellulose to cause an etherification reaction.

As the cellulose as a raw material, the above-mentioned cellulose can be used without particular limitation, but a cellulose having a high cellulose purity is preferable, and in particular, dissolving pulp and linter are preferably used. By using these, a high purity carboxymethyl cellulose or a salt thereof can be obtained.

As the mercerizing agent, alkali metal hydroxide salts such as sodium hydroxide and potassium hydroxide can be used. As the etherification agent, monochloroacetic acid, sodium monochloroacetate, or the like can be used.

When monochloroacetic acid is used as the etherification agent, the molar ratio of the mercerizing agent and the etherification agent is generally 2.00 to 2.45 in the case of a general method for producing a water-soluble carboxymethyl cellulose. The reason is that if the ratio is less than 2.00, since there is a possibility that the etherification reaction is not insufficiently performed, unreacted monochloroacetic acid may remain and waste may occur. If the ratio exceeds 2.45, since there is a possibility that a side reaction due to an excessive mercerizing agent and monochloroacetic acid may proceed to produce a glycolic acid alkali metal salt, it may be uneconomical.

In the present invention, a commercially available carboxymethyl cellulose or a salt thereof may be used as it is, or may be used after being treated as necessary. Examples of the commercially available product include "SANROSE" (sodium salt of carboxymethyl cellulose) manufactured by Nippon Paper Industries Co., Ltd.

[Pulverization Treatment]

In the present invention, for the carboxymethyl cellulose or a salt thereof, the above-described carboxymethyl cellulose or a salt thereof may be used as it is, or a carboxymethyl cellulose or a salt thereof which has been further subjected to a pulverization treatment (pulverized product) may also be used. The pulverization treatment is a mechanical pulverization treatment usually performed using a machine. Examples of the method for pulverizing the carboxymethyl cellulose or a salt thereof include both a dry pulverization method of treating the carboxymethyl cellulose or a salt thereof in a powder state and a wet pulverization method of treating the carboxymethyl cellulose or a salt thereof in a state of being dispersed or dissolved in a liquid. In the present invention, any of these may be selected.

When an aqueous solution of the carboxymethyl cellulose or a salt thereof is prepared, gel particles derived from the carboxymethyl cellulose or a salt thereof remain as an undissolved substance in the aqueous solution. By subjecting the carboxymethyl cellulose or a salt thereof to a mechanical dry or wet pulverization treatment, in an aqueous solution of a mechanically pulverized product of the carboxymethyl cellulose or a salt thereof, the gel particles are micronized. As a result, it is considered that when an electrode is formed using the aqueous solution of a mechanically pulverized product of the carboxymethyl cellulose or a salt thereof, it is possible to further suppress coarse undissolved substances that cause streak-like defects (streaks), peeling, pinholes, and the like generated on the surface of the electrode.

Examples of a pulverizer usable for the mechanical pulverization treatment in the present invention include a dry pulverizer and a wet pulverizer as described below.

Examples of the dry pulverizer include a cutting type mill, an impact type mill, an airflow type mill, and a medium mill. These can be used alone or in combination, or can be processed in several stages in the same model, but the airflow type mill is preferable.

Examples of the cutting type mill include a mesh mill (manufactured by Horai Co., Ltd.), ATMOS (manufactured by Yamamoto Hyakuma Mfg. Co., Ltd.), a knife mill (manufactured by Pallmann), a granulator (manufactured by Herbolt), and a rotary cutter mill (manufactured by Nara Machinery Co., Ltd.).

Examples of the impact type mill include a pulverizer (manufactured by Hosokawa Micron Corporation), a fine impact mill (manufactured by Hosokawa Micron Corporation), a super micron mill (manufactured by Hosokawa Micron Corporation), a sample mill (manufactured by Seishin Enterprise Co., Ltd.), a bantam mill (manufactured by Seishin Enterprise Co., Ltd.), an atomizer (manufactured by Seishin Enterprise Co., Ltd.), a tornade mill (Nikkiso Co., Ltd.), a turbo mill (Turbo Kogyo Co., Ltd.), and a bevel impactor (manufactured by Aikawa Iron Works Co., Ltd.).

Examples of the airflow type mill include a CGS type jet mill (manufactured by Mitsui Mining Co., Ltd.), a jet mill (manufactured by Sansho Industry Co., Ltd.), EBARA jet micronizer (manufactured by Ebara Corporation), Ceren MIller (manufactured by Masuko Sangyo Co., Ltd.), and a supersonic jet mill (manufactured by Nippon Pneumatic Mfg. Co., Ltd.).

Examples of the medium mill include a vibration ball mill.

Examples of the wet pulverizer include Masscolloider (manufactured by Masuko Sangyo Co., Ltd.), a high-pressure homogenizer (manufactured by Sanmaru Machinery Co., Ltd.), and a medium mill. Examples of the medium mill include a bead mill (manufactured by AIMEX CO., LTD.).

[Particle Diameter of Carboxymethyl Cellulose]

In the present invention, the particle diameter of the carboxymethyl cellulose or a salt thereof is preferably small. That is, the value of the volume cumulative 100% particle diameter (in the present specification, hereinafter, it may be referred to as "maximum particle diameter") measured with a laser diffraction/scattering particle size distribution meter using methanol as a dispersion medium is desirably less than 100 μm, more desirably less than 50 μm, and still more desirably less than 45 μm. When the maximum particle diameter of the carboxymethyl cellulose or a salt thereof is too large, undissolved substance of the carboxymethyl cellulose or a salt thereof in an aqueous solution tends to increase.

In the present invention, the carboxymethyl cellulose or a salt thereof may be subjected to a granulation treatment. This facilitates handling. When the granulation treatment is performed, the maximum particle diameter of the carboxymethyl cellulose or a salt thereof may be the above value or more, but the maximum particle size of the carboxymethyl cellulose or a salt thereof before the granulation treatment is preferably less than the above value.

The lower limit of the maximum particle diameter is not particularly limited. A smaller value is more preferable, and it is sufficient that the value is more than 0.

In the carboxymethyl cellulose or a salt thereof, a volume cumulative 50% particle diameter (hereinafter, referred to as an average particle diameter) measured with a laser diffraction/scattering particle size distribution meter using methanol as a dispersion medium is usually 30 um or less, preferably 20 μm or less, and more preferably 15 μm or less. The lower limit of the average particle diameter is not particularly limited, and is usually 5 um or more, preferably 10 um or more, and more preferably 12 μm or more.

In the present invention, the carboxymethyl cellulose or a salt thereof can be classified based on the size of the particle diameter (preferably the size of the maximum particle diameter). The classification means a process of sieving particles to be classified into particles having a size equal to or more than a certain particle diameter and particles having a size equal to or less than the certain particle diameter.

The classification is preferably performed based on whether the maximum particle diameter is less than the above value or equal to or more than the above value. This makes it possible to selectively collect the carboxymethyl cellulose or a salt thereof having a maximum particle diameter less than the above value.

When a pulverized product of the carboxymethyl cellulose or a salt thereof is used as the carboxymethyl cellulose or a salt thereof, the timing of the classification is not particularly limited, and the classification may be provided in the middle of the pulverization treatment or may be provided after the end of the pulverization treatment.

As the classification method, a known method such as a method with a dry classifier or a wet classifier may be used. Examples of the dry classifier include a cyclone classifier, a DS separator, a turbo classifier, a microseparator, and an air separator. On the other hand, examples of the wet classifier include a hydrocyclone-type classifier, a centrifugal precipitator, and a hydrooscillator. Among them, a dry classifier is preferable, and a cyclone-type classifier is more preferable.

<Component B: Saturated Carboxylic Acid Having 6 or Less Carbon Atoms or Salt Thereof>

It is important that the electrode binder of the present invention contains a saturated carboxylic acid having 6 or less carbon atoms or a salt thereof. The saturated carboxylic acid having 6 or less carbon atoms in the present invention represents an aliphatic hydroxy acid, an aromatic hydroxy acid, a saturated fatty acid, a dicarboxylic acid, a tricarboxylic acid, or the like having 6 or less carbon atoms, and is more preferably an aliphatic hydroxy acid having 6 or less carbon atoms. Examples of the aliphatic hydroxy acid include citric acid, malic acid, gluconic acid, and succinic acid.

Examples of the saturated carboxylate having 6 or less carbon atoms include salts of saturated carboxylic acids and the like exemplified above. As the form of such a salt, a saturated carboxylic acid potassium salt, a saturated carboxylic acid calcium salt, and a saturated carboxylic acid lithium salt are preferable. Among them, saturated carboxylic acid lithium salts are more preferable, and among them, citric acid lithium salt is still more preferable.

When such a saturated carboxylic acid having 6 or less carbon atoms or a salt thereof is used as an electrode binder together with carboxymethyl cellulose, a hydroxy group or a carboxy group in the saturated carboxylic acid having 6 or less carbon atoms forms a crosslinked structure via a hydrogen bond with a carboxy group of the carboxymethyl cellulose. In this crosslinked structure, since a larger amount of hydroxy groups and carboxyl groups are contained in the molecule than carboxymethyl cellulose alone, the reactivity with a negative electrode material such as SiOx dispersed in a negative electrode slurry via hydrogen bonds increases. As a result, it is presumed that a stable oxide film can be formed on the surface with the negative electrode material such as SiOx, the decomposition of an electrolytic solution is suppressed, and a solid electrolyte interface (SEI) film does not have an excessive thickness on the electrode surface, leading to an effect of improving battery characteristics.

When the saturated carboxylic acid lithium salt having 6 or less carbon atoms is used, the saturated carboxylic acid can exhibit neutrality or weak alkalinity when added to an electrode composition. When the saturated carboxylic acid is not in the state of a lithium salt, the electrode composition to be an aqueous solution becomes strongly acidic, and therefore the viscosity of the electrode composition decreases or the polarity is unevenly distributed, leading to unevenness when the electrode composition is applied to a current collector, which is not preferable. Further, since the saturated carboxylic acid having 6 or less carbon atoms is a lithium salt, mixing of impurities is reduced when a lithium-based active material is used, and therefore electrical performance is easily exhibited.

<Electrode Binder>

It is important that the binder for non-aqueous electrolyte secondary battery electrodes of the present invention contains Component A: a carboxymethyl cellulose or a salt thereof, and Component B: a saturated carboxylic acid having 6 or less carbon atoms or a salt thereof, described above. Such an electrode binder contains the saturated carboxylic acid having 6 or less carbon atoms or a salt thereof in an amount of preferably 10 to 120 wt%, more preferably 20 to 100 wt%, still more preferably 30 to 50 wt% with respect to the carboxymethyl cellulose or a salt thereof. When the mixing ratio is in this range, it is presumed that the formation of a crosslinked structure of the carboxymethyl cellulose and the saturated carboxylic acid having 6 or less carbon atoms or a salt thereof described above is more effectively generated.

The binder for a non-aqueous secondary battery electrode of the present invention preferably satisfies Condition (I) or Condition (II) shown below.

Condition (I): When Component A is a carboxymethyl cellulose having a degree of carboxymethyl substitution of 0.45 or more and 1.0 or less or a salt thereof, Component B is contained in the range of 1 to 100 parts by weight with respect to 100 parts by weight of Component A.

Condition (II): When Component A is a carboxymethyl cellulose having a degree of carboxymethyl substitution of more than 1.0 or a salt thereof, Component B is contained in the range of 1 to 200 parts by weight with respect to 100 parts by weight of Component A.

When the degree of carboxymethyl substitution of Component A increases, the number of crosslinking points in carboxymethyl cellulose increases, and therefore aggregation or the like is not caused even when the added amount of Component B increases.

Therefore, when Component A is a carboxymethyl cellulose having a degree of carboxymethyl substitution of 0.45 or more and 1.0 or less or a salt thereof, Component B is contained preferably in the range of 1 to 100 parts by weight, more preferably in the range of 1 to 80 parts by weight, and still more preferably in the range of 10 to 50 parts by weight with respect to 100 parts by weight of Component A.

When Component A is a carboxymethyl cellulose having a degree of carboxymethyl substitution of more than 1.0 or a salt thereof, Component B is contained preferably in the range of 1 to 200 parts by weight, more preferably in the range of 1 to 180 parts by weight, still more preferably in the range of 10 to 150 parts by weight, and particularly preferably more than 100 parts by weight and 150 parts by weight or less with respect to 100 parts by weight of Component A.

When the mixing ratio is in the above range, it is presumed that the formation of a crosslinked structure of the carboxymethyl cellulose and the saturated carboxylic acid having 6 or less carbon atoms or a salt thereof described above is more effectively generated.

The electrode binder of the present invention can also be an aqueous solution. The production conditions of such an aqueous solution are not particularly limited, and for example, the aqueous solution can be prepared by adding the electrode binder to water (for example, distilled water, purified water, tap water, and the like) and dissolving the electrode binder by stirring or the like as necessary. In addition, the carboxymethyl cellulose or a salt thereof may be dissolved in water or the like, then the saturated carboxylic acid having 6 or less carbon atoms or a salt thereof may be added, and may be dissolved by stirring or the like. Similarly, it is also possible to dissolve the saturated carboxylic acid having 6 or less carbon atoms or a salt thereof in water or the like and then dissolve the carboxymethyl cellulose or a salt thereof by stirring or the like.

The pH of the aqueous solution of such an electrode binder is preferably in the range of 1 to 8, more preferably in the range of 2 to 8, still more preferably in the range of 3 to 8, and particularly preferably in the range of 6 to 8. When the pH of the aqueous solution is lean to the acidic side, it becomes difficult to exhibit the viscosity expected for the aqueous solution. Therefore, when the pH is in the range of 6 to 8, especially the balance between viscosity and solubility is achieved, and an aqueous solution excellent in coatability can be obtained.

In the aqueous solution of the electrode binder, the viscosity of the 1 mass% aqueous solution measured with a B-type viscometer (30 rpm) at 25°C is preferably 5 mPa·s or more, more preferably 250 mPa·s or more, and is preferably 15,000 mPa·s or less, more preferably 10,000 mPa·s or less, still more preferably 7,000 mPa-s or less. When the aqueous solution of the electrode binder is in the above viscosity range, suitable thickening and binding properties can be exhibited when the electrode binder is added to an electrode composition.

In the electrode binder of the present invention, other components constituting the electrode composition can be added as long as the effect of the present invention is not impaired. Examples of such an additive component include an inorganic salt that is positively ionized in the aqueous solution. When cations are mixed, the crosslinked structure of the carboxymethyl cellulose is reinforced, and therefore an excellent electrical property effect can be exhibited. As such cations, cations such as monovalent, divalent, and trivalent cations can be appropriately used, and specifically, cations containing Fe ions and the like are preferable.

<Electrode Composition>

The electrode binder of the present invention can constitute an electrode composition together with an active material of an electrode. The property of the electrode composition is not particularly limited, and may be either a slurry form or a paste form.

In the present invention, the content of the carboxymethyl cellulose or a salt thereof in the electrode composition is preferably 0.1 to 4.0 mass% with respect to the entire electrode composition.

The electrode composition may contain various components depending on whether the electrode formed by the composition is a negative electrode or a positive electrode.

In the case of an electrode composition for a negative electrode, a negative electrode active material is usually contained. Examples of the negative electrode active material that can be used include a graphite material such as graphite (natural graphite, artificial graphite), coke, or carbon fiber; an element capable of forming an alloy with lithium, that is, an element such as Al, Si, Sn, Ag, Bi, Mg, Zn, In, Ge, Pb, or Ti; a compound containing an element capable of forming an alloy with the lithium; a composite product of the element and the compound capable of forming an alloy with the lithium and carbon and/or the graphite material; and a nitride containing lithium. Among them, a graphite material and/or a silicon-based compound is preferable, graphite and/or a silicon-based compound is more preferably contained, and at least a silicon-based compound is preferably contained.

In the case of an electrode composition for a positive electrode, a positive electrode active material is usually contained. As the positive electrode active material, a $LiMe_xO_y$ (Me means a transition metal containing at least one of Ni, Co, and Mn. x and y mean any numbers) -based positive electrode active material is preferable. The $LiMe_xO_y$-based positive electrode active material is not particularly limited, and $LiMn_2O_4$-based, $LiCoO_2$-based, and $LiNiO_2$-based positive electrode active materials are preferable. Examples of the $LiMn_2O_4$-based, $LiCoO_2$-based, and $LiNiO_2$-based positive electrode active materials include a compound in which various metal elements are substituted with $LiMnO_2$, $LiMn_2O_4$, $LiCoO_2$, or $LiNiO_2$ as a main skeleton. $LiMn_2O_4$-based, $LiCoO_2$-based, and $LiNiO_2$-based positive electrode active materials have excellent performance as a positive electrode active material such as excellent diffusion performance of electrons and lithium ions, and thus a lithium ion secondary battery having high charge-discharge efficiency and having good cycle characteristics can be obtained. Among them, a $LiCoO_2$-based positive electrode active material is preferable, and $LiCoO_2$ is more preferable. On the other hand, from the viewpoint of low material cost, it is preferable to use a $LiMn_2O_4$-based positive electrode active material.

The content of the active material in the electrode composition is usually 90 to 99 mass%, preferably 91 to 99 mass%, and more preferably 92 to 99 mass%.

In the case of an electrode composition for a positive electrode, the electrode composition preferably has a conductive material. The electrode composition having a conductive material improves the characteristics of the positive electrode to be produced. In addition, the conductive material can ensure the electrical conductivity of the positive electrode. Examples of the conductive material include one kind or a mixture of two or more kinds of carbon substances such as carbon black, acetylene black, and graphite. Among them, carbon black is preferable.

The electrode composition may contain a binder other than the aqueous solution of the carboxymethyl cellulose or of a salt thereof. Examples of the binder in the case of the electrode composition for a negative electrode include a synthetic rubber-based binder. As the synthetic rubber-based binder, one or more selected from the group consisting of styrene butadiene rubber (SBR), nitrile butadiene rubber, methyl methacrylate butadiene rubber, chloroprene rubber, carboxy-modified styrene butadiene rubber, and latexes of these synthetic rubbers can be used. Among them, styrene-butadiene rubber (SBR) is preferable. Examples of the binder in the case of the electrode composition for a positive electrode include polytetrafluoroethylene (PTFE) in addition to the synthetic rubber-based binder mentioned as the binder for a negative electrode, and among them, polytetrafluoroethylene (PTFE) is preferable.

The content of the binder in the electrode composition is usually 1 to 10 mass%, preferably 1 to 6 mass%, and more preferably 1 to 2 mass%.

The production conditions of the electrode composition are not particularly limited. For example, other components constituting the electrode composition are added to an aqueous solution of carboxymethyl cellulose or a salt thereof, and mixed with stirring as necessary.

The properties of the electrode composition are not particularly limited either. Examples thereof include a liquid, a paste, a slurry, and the like, and any of them may be used.

The electrode composition is used for producing an electrode for non-aqueous electrolyte secondary batteries. The electrode for non-aqueous electrolyte secondary batteries may be produced by a method of stacking the electrode composition on a current collecting substrate (current collector). Examples of the stacking method include blade coating, bar coating, and die coating, and blade coating is preferable. For example, in the case of blade coating, a method of casting the electrode composition on a current collecting substrate using a coating device such as a doctor blade is exemplified. The stacking method is not limited to the above specific examples, and a method in which the electrode composition is discharged from an extrusion-type liquid injector having a slot nozzle and applied onto a running current collecting substrate wound around a backup roll is also exemplified. In blade coating, after casting, drying by heating (the temperature is, for example, 80 to 120°C, and the heating time is, for example, 4 to 12 hours) or the like and pressurization by roll pressing or the like can be further performed as necessary.

As the current collecting substrate, any electric conductor that does not cause a fatal chemical change in the configured battery can be used.

As the current collecting substrate for the negative electrode active material, stainless steel, nickel, copper, titanium, carbon, copper, or a material obtained by applying carbon, nickel, titanium, or silver to the surface of the stainless steel can be used. Among them, copper or a copper alloy is preferable, and copper is most preferable.

Examples of the material of the current collecting substrate for a positive electrode include metals such as aluminum and stainless steel, and aluminum is preferable. As the shape of the current collecting substrate, a net, a punched metal, a foam metal, a foil processed into a plate shape, or the like can be used, and a foil processed into a plate shape is preferable.

The shape of the electrode for non-aqueous electrolyte secondary batteries formed of the electrode composition is not particularly limited, and is usually a sheet shape. The thickness (thickness of mixture layer formed from the electrode composition excluding current collecting substrate portion) in the case of a sheet-like electrode plate is difficult to unambiguously define since it is appropriately selected depending on the makeup of the composition, production conditions, and the like, but is usually 30 to 150 $\mu$m.

The electrode formed of the composition is used as an electrode of non-aqueous electrolyte secondary batteries. That is, the present invention includes an electrode formed of the composition, and a non-aqueous electrolyte secondary battery can be produced using the electrode. The non-aqueous electrolyte secondary battery can have a structure in which a positive electrode and a negative electrode are alternately stacked with a separator interposed therebetween and wound many times. The separator is usually impregnated with a non-aqueous electrolyte.

As the negative electrode and/or the positive electrode, a negative electrode and/or a positive electrode formed of the electrode composition described above can be used. In such a non-aqueous electrolyte secondary battery, the carboxymethyl cellulose or a salt thereof having excellent solubility is used, a step such as filtration by a filter can be omitted, and therefore the non-aqueous electrolyte secondary battery is excellent in productivity, the initial irreversible capacity is remarkably improved, and high battery characteristics can be exhibited.

Examples

Hereinafter, embodiments of the present invention will be described with reference to Examples, but the present invention is not limited thereto.

In the present Examples and Comparative Examples, the measurement of each index for carboxymethyl cellulose or a salt thereof is performed by the following method.

<Method for Measuring Degree of Carboxymethyl Substitution (CM-DS)>

About 2.0 g of a sample of a carboxymethyl cellulose pulverized product was precisely weighed and put into a 300 mL stoppered conical flask. Methanol (solution obtained by adding 100 mL of special grade concentrated nitric acid to 1000 mL of methanol) in an amount of 100 mL was added, and the mixture was shaken for 3 hours to convert carboxymethyl cellulose salt (CMC salt) into H-CMC (carboxymethyl cellulose). Bone-dry H-CMC was precisely weighed in an amount of 1.5 to 2.0 g and put into a 300 mL stoppered conical flask. H-CMC was wetted with 15 mL of 80% methanol, 100 mL of 0.1 N NaOH was added, and the mixture was shaken at room temperature for 3 hours. Excess NaOH was back-titrated with 0.1 N $H_2SO_4$ using phenolphthalein as indicator. CM-DS was calculated by the following formula 1.

(Formula 1)

$$A = [(100 \times F - (0.1\ N\ H_2SO_4\ (mL)) \times F') \times 0.1]/(\text{bone-dry weight of H-CMC (g)})$$

$$\text{Degree of carboxymethyl substitution (CM-DS)} = 0.162 \times A/(1 - 0.058 \times A)$$

A: 1 N NaOH amount required to neutralize 1 g of H-CMC (mL)
F': Factor of 0.1 N $H_2SO_4$
F: Factor of 0.1 N NaOH

<Viscosity>

A carboxymethylated cellulose or a salt thereof was weighed in a 1000 mL glass beaker and dispersed in 900 mL of distilled water to prepare an aqueous dispersion having a solid content of 1% (w/v). The aqueous dispersion was stirred at 25°C using a stirrer at 600 rpm for 3 hours. Thereafter, according to the method of JIS-Z-8803, the viscosity after 3 minutes was measured at No. 1 rotor/rotation speed of 30 rpm using a B-type viscometer (manufactured by Toki Sangyo Co., Ltd.).

<Measurement of Maximum Particle Diameter, Average Particle Diameter and Particle Size Distribution>

The maximum particle diameter and the average particle diameter of carboxymethyl cellulose were measured with a laser diffraction/scattering particle size distribution meter (MICROTRAC Model-9220 SPA, manufactured by Nikkiso Co., Ltd.). Here, the maximum particle diameter indicated a value of a 100% volume cumulative particle diameter, and the average particle diameter indicates a value of a 50% volume cumulative particle diameter. In the measurement, the sample was dispersed in methanol and then subjected to ultrasonic treatment for at least 1 minute or more, and the measurement was performed. In Examples 2 and 10, the maximum particle diameter and the average particle diameter were not measured.

<Measurement of Mass Ratio of Mass of Filtration Residue to Dry Mass of Carboxymethyl Cellulose Dissolved in Aqueous Solution>

Two liters of an aqueous solution containing 0.3 mass% of a carboxymethyl cellulose or a salt thereof (mass% based on a dry mass of the carboxymethyl cellulose or a salt thereof) was prepared. This 2 liters of the aqueous solution was filtered through a 250 mesh filter (stainless steel, mesh size 63 μm) using a filter ("Sepa-rohto" manufactured by Kiriyama glass. Co.) under a reduced pressure of -200 mmHg. The residue remaining on the 250 mesh filter was air-blown and dried at a temperature of 105°C for 16 hours, and then the mass of the dried residue was measured and expressed as mass percent (ppm) with respect to the mass of carboxymethyl cellulose in the aqueous carboxymethyl cellulose solution.

The electrode binder obtained in Examples and Comparative Examples were measured and evaluated as follows.

<Solubility of Electrode Binder Dissolved in Aqueous Solution>

For the solubility of the electrode binder dissolved in an aqueous solution, a carboxymethyl cellulose and 100 mass% of an organic acid with respect to the carboxymethyl cellulose were weighed in a 300 mL glass beaker, and distilled water was added so that the solid concentration of carboxymethyl cellulose was 2% (w/v) to obtain an aqueous dispersion of the electrode binder. The aqueous dispersion was stirred at 25°C using a stirrer at 500 rpm for 1 hour. Thereafter, the presence or absence of a lump of commercially available carboxymethyl cellulose (lump of dissolved powder) was visually determined, and the solubility was evaluated according to the following criteria.

A: There is no generation of a lump, and solubility is good.
B: A lump is generated, and solubility is poor.

<pH of Electrode Binder Dissolved in Aqueous Solution>

The pH (hydrogen ion index) of the electrode binder dissolved in the aqueous solution was measured at a temperature of 25°C using a glass electrode pH meter ("HM-30P" manufactured by DKK-TOA Corporation). Note that this measurement was performed for Examples 8 to 10.

<Viscosity of Electrode Binder Dissolved in Aqueous Solution>

For the viscosity of the electrode binder dissolved in the aqueous solution, the viscosity of the aqueous dispersion of the electrode binder was measured after 3 minutes at No. 1 rotor/rotation speed of 30 rpm using a B-type viscometer (manufactured by Toki Sangyo Co., Ltd.) in the same manner as the carboxymethylated cellulose.

A film evaluation was performed to electrode binders 8 to 11 obtained in Example 8 to 10 and Comparative Example 1 as follows.

<Film Evaluation of Electrode Binder>

(Filming of Electrode Binder)

Each of the obtained electrode binders 1 to 4 was adjusted so as to have a solid content concentration of carboxymethyl cellulose of 2% (w/v), then glycerol was added so as to have a solid content of 50 wt% with respect to the carboxymethyl cellulose, and was stirred well until dissolved.

Subsequently, defoaming was performed using MAZERUSTAR (KK-250S manufactured by Kurabo Industries Ltd.), 80 g of each of the electrode binders 1 to 4 was poured into a polytetrafluoroethylene petri dish having a diameter of 14 cm, the foam was caused to flow over the entire surface of the petri dish so that air bubbles did not enter the petri dish, and then the foam was dried at 30°C/30 hours using a blower dryer to obtain films 1 to 4 of the electrode binders 1 to 4.

(Film Evaluation)

The obtained films 1 to 4 were each allowed to stand still in a room maintained at a room temperature of 23°C and a humidity of 50% for one day and night, and cut into a width of 1.5 cm, and then subjected to a tensile test with a TENSILON universal testing machine. The test was performed under the conditions of a distance between samples of 5 cm and a speed of 1 cm/min, and an elongation rate correlated with the coating film strength was obtained.

In addition, the electrode compositions were evaluated as follows using the electrode binders 1 to 3 and 6 to 11 obtained in Examples and Comparative Examples.

<Coatability of Electrode Composition>

The slurry obtained at the time of preparing a negative electrode plate of each Example and Comparative Example was applied to a copper foil, and the coating surface after roll pressing after drying was visually checked and evaluated according to the following criteria.

A: There is no agglomerate or coating peeling on the slurry coating surface on the copper foil, and coating unevenness is not observed at all.
B: An aggregate or coating peeling is observed on a part of the slurry coating surface on the copper foil, but there is no problem when used in a battery.
C: There are aggregates, coating peeling, coating unevenness, and the like over the entire slurry coating surface on the copper foil.

A battery evaluation was performed as follows using the coin-type non-aqueous electrolyte secondary batteries obtained in Examples 1 to 3, 7, 9, and 10 and Comparative Example 1 to 2.

<Battery Evaluation>

(Discharge Capacity (Charge-Discharge Rate Test))

For the charge-discharge rate test of the coin-type non-aqueous electrolyte secondary batteries obtained in Examples and Comparative Examples, BTS2004 manufactured by NAGANO & Co., Ltd. was used, and 52 cycles were performed in a thermostatic bath at 25°C using the coin-type non-aqueous electrolyte secondary battery in the order of charge treatment and discharge treatment as 1 cycle of charging and discharging. As a condition of the charge treatment, a constant current constant voltage (CC-CV) method (CC current 0.2 C, CV voltage 4.2 V, termination current 0.02 C) was used in all cycles.
As a condition of the discharge treatment, the termination voltage was set to 3.0 V. In the first 1 cycle, the constant current of the discharge treatment was performed at 0.2 C, and after the discharging, the discharge capacity (mAh/g) after 1 cycle was measured.
Thereafter, until the 52nd cycle, a constant current of the discharge treatment was set as described below, and the discharge capacity (mAh/g) was measured after discharging in each cycle.

(Constant Current of Discharge Treatment in Each Cycle)

Second to 10th cycle: constant current of discharge treatment 0.2 C

11th to 20th cycle: constant current of discharge treatment 1 C
21st cycle: constant current of discharge treatment 0.2 C
22nd to 31st cycle: constant current of discharge treatment 2 C
32nd cycle: constant current of discharge treatment 0.2 C
33rd to 42nd cycle: constant current of discharge treatment 3 C
43rd to 52nd cycle: constant current of discharge treatment 0.2 C

(Capacity Retention Rate)

The capacity retention rate is calculated from the discharge capacity (mAh/g) in each cycle test described above, using the following formula:

"Capacity retention rate = discharge capacity after 1 cycle (mAh/g)/discharge capacity after 52 cycles (mAh/g) × 100"

(Example 1)

<Production of Electrode Binder>

A solution obtained by dissolving 2720 g of isopropyl alcohol, 170 g of Na monochloroacetate, and 58 g of sodium hydroxide in 480 g of water was added to a biaxial kneader whose rotation speed was adjusted to 100 rpm, and 160 g of linter pulp was charged in terms of the dry weight when dried at 30°C for 60 minutes. The mixture was stirred and mixed at 30°C for 90 minutes to prepare mercerized cellulose, and then the temperature was raised to 70°C to cause a carboxymethylation reaction for 90 minutes. After completion of the reaction, the reaction mixture was neutralized with acetic acid so as to have a pH of about 7, and subjected to liquid removal, drying, and pulverization to obtain a sodium salt of carboxymethyl cellulose (hereinafter, it may be referred to as "CMC1") having a degree of carboxymethyl substitution of 0.70, a viscosity of a 1 mass% aqueous solution measured with a B-type viscometer at 25°C of 7,900 mPa·s, and a filtration residue with respect to a dry mass of the carboxymethyl cellulose dissolved in the aqueous solution of 48 ppm. The above-described sodium carboxymethyl cellulose salt and 100 mass% citric acid (manufactured by FUJIFILM Wako Pure Chemical Corporation) with respect to the sodium carboxymethyl cellulose salt were weighed in a 300 mL glass beaker, and distilled water was added thereto so that the solid concentration of carboxymethyl cellulose was 2% (w/v), whereby an aqueous dispersion was prepared. The aqueous dispersion was stirred at 25°C using a stirrer at 500 rpm for 1 hour to obtain an electrode binder 1.

<Production of Negative Electrode Plate>

As a negative electrode material, SiOx, acetylene black (manufactured by Strem Chemicals), the electrode binder 1, and styrene-butadiene rubber (SBR, manufactured by JSR Corporation, product number: S2910(E)-12-Na) were mixed at a solid content weight ratio of 97 : 0.5 . 1.0 : 1.5, water was added so that a slurry concentration was 45.6 mass%, and the mixture was sufficiently stirred using MAZERUSTAR (KK-250 S manufactured by Kurabo Industries Ltd.) to obtain a slurry 1. This slurry was applied to a copper foil (NC-WS manufactured by Furukawa Electric Co., Ltd.) having a length 320 mm × a width 170 mm × a thickness 17 μm by an applicator and air-dried for 30 minutes, and then dried at 60°C for 30 minutes by a dryer. Further, pressing was performed under conditions of a roll circumferential speed of 50 m/min and at 5 kN using a small tabletop roll press (manufactured by TESTER SANGYO CO., LTD., SA-602) to obtain a negative electrode plate 1 having a basis weight of 62.9 g/$m^2$ and an effective discharge capacity of 330 mAh/g.

<Production of Coin-Type Non-aqueous Electrolyte Secondary Battery>

The obtained negative electrode plate 1 and a $LiCoO_2$ positive electrode plate (manufactured by Hohsen Corp., basis weight: 110.2 g/$m^2$, discharge effective capacity: 145 mAh/g) were punched into a circle having a diameter of 16 mm, and the punched negative electrode plate and positive electrode plate were vacuum-dried at 120°C for 12 hours.
Similarly, a separator (polypropylene separator with a thickness of 20 μm manufactured by CS Tech) was punched into a circle having a diameter of 17 mm and vacuum-dried at 60°C for 12 hours.
Thereafter, the negative electrode plate 1 was placed in a stainless steel circular dish type container having a diameter of 20.0 mm, then the separator, the positive electrode plate, a spacer (diameter 15.5 mm, thickness 1 mm), and a stainless steel washer (manufactured by Hohsen Corp.) were stacked in this order, and then 300 μL of an electrolytic solution (1 mol/L of $LiPF_6$, volume ratio of ethylene carbonate to diethyl carbonate 1: 1) was added to the circular dish type container. This was covered with a stainless steel cap via a polypropylene packing and sealed with a coin battery crimping machine (Hohsen Corp.) to obtain a coin-type non-aqueous electrolyte secondary battery 1.

(Example 2)

A solution obtained by dissolving 170 g of Na monochloroacetate and 58 g of sodium hydroxide in 480 g of water was added to a biaxial kneader whose rotation speed was adjusted to 100 rpm, and 160 g of softwood pulp (NDP-T manufactured by Nippon Paper Industries Co., Ltd.) was charged in terms of the dry weight when dried at 30°C for 60 minutes. The mixture was stirred and mixed at 30°C for 90 minutes to prepare mercerized cellulose. While the mixture was further stirred, 2720 g of isopropyl alcohol was added, and the mixture was stirred for 30 minutes and then heated to 70°C to cause a carboxymethylation reaction for 90 minutes. After completion of the reaction, the reaction mixture was neutralized with acetic acid so as to have a pH of about 7, and subjected to liquid removal, drying, and pulverization to obtain a sodium salt of carboxymethyl cellulose having a degree of carboxymethyl substitution of 0.80 and a viscosity of a 1 mass% aqueous solution measured with a B-type viscometer at 25°C of 17,260 mPa·s. The above-described sodium carboxymethyl cellulose salt and 100 mass% citric acid (manufactured by FUJIFILM Wako Pure Chemical Corporation) with respect to the sodium carboxymethyl cellulose salt were weighed in a 300 mL glass beaker, and distilled water was added thereto so that the solid concentration of carboxymethyl cellulose was 2% (w/v), whereby an aqueous dispersion was prepared. The aqueous dispersion was stirred at 25°C using a stirrer at 500 rpm for 1 hour to obtain an electrode binder 2.
A slurry, a negative electrode plate, and a coin-type non-aqueous electrolyte secondary battery were produced in the same manner as in Example 1 except that the electrode binder 2 was used instead of the electrode binder 1.

(Example 3)

A commercially available carboxymethyl cellulose (1 mass% aqueous solution having a B-type viscosity of 4,700 mPa-s and a carboxymethyl substitution degree of 0.70 at 25°C, manufactured by Nippon Paper Chemical Co., Ltd., product name "SANROSE") and 100 mass% citric acid (manufactured by FUJIFILM Wako Pure Chemical Corporation) with respect to the carboxymethyl cellulose were weighed in a 300 mL glass beaker, and distilled water was added thereto so that the solid concentration of carboxymethyl cellulose was 2% (w/v), whereby an aqueous dispersion was prepared. Further, an iron (II) sulfate heptahydrate (manufactured by FUJIFILM Wako Pure Chemical Corporation) was added so as to be 50 mass% with respect to the carboxymethyl cellulose, and the aqueous dispersion was stirred at 25°C using a stirrer at 500 rpm for 1 hour, whereby an electrode binder 3 was obtained.

A slurry, a negative electrode plate, and a coin-type non-aqueous electrolyte secondary battery were produced in the same manner as in Example 1 except that the electrode binder 3 was used instead of the electrode binder 1.

(Example 4)

An electrode binder 4 was obtained in the same manner as in Example 1 except that malic acid (manufactured by FUJIFILM Wako Pure Chemical Corporation) was used instead of citric acid.

(Example 5)

An electrode binder 5 was obtained in the same manner as in Example 1 except that succinic acid (manufactured by FUJIFILM Wako Pure Chemical Corporation) was used instead of citric acid.

(Example 6)

An electrode binder 6 was obtained in the same manner as in Example 1 except that sodium citrate (manufactured by FUJIFILM Wako Pure Chemical Corporation) was used instead of citric acid. A slurry was prepared in the same manner as in Example 1 except that the electrode binder 6 was used instead of the electrode binder 1.

(Example 7)

An electrode binder 7 was obtained in the same manner as in Example 1 except that calcium gluconate (manufactured by FUJIFILM Wako Pure Chemical Corporation) was used instead of citric acid. A slurry, a negative electrode plate, and a coin-type non-aqueous electrolyte secondary battery were produced in the same manner as in Example 1 except that the electrode binder 7 was used instead of the electrode binder 1.

(Example 8)

The CMC1 described above and 100 mass% of lithium citrate (manufactured by FUJIFILM Wako Pure Chemical Corporation) with respect to the CMC1 were weighed in a 300 mL glass beaker, and distilled water was added thereto so that the solid concentration of carboxymethyl cellulose was 2% (w/v), whereby an aqueous dispersion was prepared. The aqueous dispersion was stirred at 25°C using a stirrer at 500 rpm for 1 hour to obtain an electrode binder 8.

A slurry was prepared in the same manner as in Example 1 except that the electrode binder 8 was used instead of the electrode binder 1.

(Example 9)

An electrode binder 9 was obtained in the same manner as in Example 8 except that 10 mass% of lithium citrate with respect to the CMC1 was used. A slurry, a negative electrode plate, and a coin-type non-aqueous electrolyte secondary battery were produced in the same manner as in Example 1 except that the electrode binder 9 was used instead of the electrode binder 1.

(Example 10)

A solution obtained by dissolving 1000 g of isopropyl alcohol, 240 g of Na monochloroacetate, and 83 g of sodium hydroxide in 120 g of water was added to a biaxial kneader whose rotation speed was adjusted to 100 rpm, and 160 g of linter pulp was charged in terms of the dry weight when dried at 30°C for 60 minutes. The mixture was stirred and mixed at 30°C for 90 minutes to prepare mercerized cellulose, and then the temperature was raised to 70°C to cause a carboxymethylation reaction for 90 minutes. After completion of the reaction, the reaction mixture was neutralized with acetic acid so as to have a pH of about 7, and subjected to liquid removal, drying, and pulverization to obtain a sodium salt of carboxymethylated cellulose having a degree of carboxymethyl substitution of 1.34, a viscosity of a 1 mass% aqueous solution measured with a B-type viscometer at 25°C of 2,800 mPa·s, and a filtration residue of 46 ppm with respect to a dry mass of the carboxymethyl cellulose dissolved in the aqueous solution. The above-described sodium carboxymethyl cellulose salt and 150 mass% lithium citrate (manufactured by FUJIFILM Wako Pure Chemical Corporation) with respect to the sodium carboxymethyl cellulose salt were weighed in a 300 mL glass beaker, and distilled water was added thereto so that the solid concentration of carboxymethyl cellulose was 2% (w/v), whereby an aqueous dispersion was prepared. The aqueous dispersion was stirred at 25°C using a stirrer at 500 rpm for 1 hour to obtain an electrode binder 10.

A slurry, a negative electrode plate, and a coin-type non-aqueous electrolyte secondary battery were produced in the same manner as in Example 1 except that the electrode binder 10 was used instead of the electrode binder 1.

(Comparative Example 1)

An electrode binder 11 was obtained in the same manner as in Example 1 except that citric acid was not added. A slurry, a negative electrode plate, and a coin-type non-aqueous electrolyte secondary battery were produced in the same manner as in Example 1 except that the electrode binder 11 was used instead of the electrode binder 1.

(Comparative Example 2)

An electrode binder 12 was obtained in the same manner as in Example 1 except that sodium fumarate (manufactured by FUJIFILM Wako Pure Chemical Corporation) was used instead of citric acid. A slurry, a negative electrode plate, and a coin-type non-aqueous electrolyte secondary battery were produced in the same manner as in Example 1 except that the electrode binder 12 was used instead of the electrode binder 1.

The measurement and evaluation results in Examples and Comparative Examples are shown in Table 1 below.

[Table 1]

| | Eiectiode Composition | | | | | | | | | | | Electrode Binder Evaluation | | Electroce Composition Evaluation | Battery Characteristic Evaluation | | |
|---|---|---|---|---|---|---|---|---|---|---|---|---|---|---|---|---|---|
| | Active Material | Electrode Binder | | | | | | | | | Latex | Solubility of Electrode Binder | Film Evaluation Elongation Rate (%) | Coatability ot Electrode Composition | Discharge Capacity (after 1 cycle) (mAh/g) | Discharge Capacity (after 52 cycles) (mAh/g) | Capacity Retention Rate (%) |
| | | Kind | Carboxymethyl Cellulose of Salt Thereof | | | | | Saturated Carboxylic Acid or Salt Thereof | CMC : Saturated Carboxylic Acid or Salt Thereof | 1% Viscosit y (,mPa·s) (30 rpm. 25° C) | pH | | | | | | | |
| | | | CM-DS | 1% Viscosity (mPa·s) (30 rpm. 25°C) | Residue Mass (ppm) | Maximum Particle Diameter (μm) | Average Particle Diameter (μm) | | | | | | | | | | | |
| Example 1 | SiOx | Electrode Binder 1 | 0.7 | 7900 | 48 | 42 | 14 | Citric Acid | 100 : 100 | 6 | - | SBR | A | - | A | 1450 | 1159 | 82.0 |
| Example 2 | SiOx | Electrode Binder 2 | 08 | 17260 | 47 | | | Citric Acid | 100 : 100 | 16 | - | SBR | A | - | B | 1386 | 756 | 55.0 |
| Example 3 | SiOx | Electrode Binder 3 | 07 | 4700 | 46 | 39 | 12 | Citric Acid | 100 : 100 | 299 | - | SBR | A | - | A | 1418 | 1078 | 76,0 |
| Example 4 | SiOx | Electrode Binder 4 | 0,7 | 7900 | 48 | 42 | 14 | Malic Acid | 100 : 100 | 6 | - | SBR | A | - | - | - | - | - |
| Example 5 | SiOx | Electrode Binder 5 | 07 | 7900 | 48 | 42 | 14 | Succinic Acid | 100 : 100 | 6 | - | SBR | A | - | - | - | - | - |
| Example 6 | SiOx | Electrode Binder 6 | 07 | 7900 | 48 | 42 | 14 | Sodium Citrate | 100 : 100 | 750 | - | SBR | A | - | A | - | - | - |
| Example 7 | SiOx | Electrode Binder 7 | 0.7 | 7900 | 48 | 42 | 14 | Calcium Gluconate | 100 : 100 | 4300 | - | SBR | A | - | A | 1233 | 540 | 440 |

(continued)

| | Eiectiode Composition | | | | | | | | | | | | Electrode Binder Evaluation | | Electroce Composition Evaluation | Battery Characteristic Evaluation | | |
|---|---|---|---|---|---|---|---|---|---|---|---|---|---|---|---|---|---|---|
| | Active Material | Electrode Binder | | | | | | | | | | Latex | Solubility of Electrode Binder | Film Evaluation Elongation Rate (%) | Coatability ot Electrode Composition | Discharge Capacity (after 1 cycle) (mAh/g) | Discharge Capacity (after 52 cycles) (mAh/g) | Capacity Retention Rate (%) |
| | | Kind | Carboxymethyl Cellulose of Salt Thereof | | | | | Saturated Carboxylic Acid or Salt Thereof | CMC : Saturated Carboxylic Acid or Salt Thereof | 1% Viscosit y (,mPa·s) (30 rpm. 25° C) | pH | | | | | | | |
| | | | CM-DS | 1% Viscosity (mPa·s) (30 rpm. 25°C) | Residue Mass (ppm) | Maximum Particle Diameter (µm) | Average Particle Diameter (µm) | | | | | | | | | | | |
| Example 8 | SiOx | Electrode Binder 8 | 07 | 7900 | 48 | 42 | 14 | Lithium Citrate | 100 : 100 | 1600 | 75 | SBR | A | 46.2 | A | - | - | - |
| Example 9 | SiOx | Electrode Binder 9 | 0.7 | 7900 | 48 | 42 | 14 | Lithium Citrate | 100 : 10 | 4800 | 72 | SBR | A | 76.9 | A | 1314 | 743 | 57 |
| Example 10 | SiOx | Electrode Binder 10 | 1.34 | 2800 | 46 | - | - | Lithium Citrate | 100 : 150 | 1230 | 75 | SBR | A | 49.3 | A | 1323 | 1005 | 76 |
| Comparative Example 1 | SiOx | Electrode Binder 11 | 07 | 7900 | 48 | 42 | 14 | - | 100 : 0 | 7900 | - | SBR | B | 29 5 | A | 1306 | 322 | 25 |
| Comparative Example 2 | SiOx | Electrode Binder 12 | 0.7 | 7900 | 48 | 42 | 14 | Sodium Fumarate | 100 : 100 | 630 | - | SBR | B | - | - | 1028 | 254 | 24.7 |

As shown in Table 1, the binder for non-aqueous electrolyte secondary battery electrodes containing Component A: a carboxymethyl cellulose having a degree of carboxymethyl substitution per anhydroglucose unit of 0.45 or more or a salt thereof and Component B: a saturated carboxylic acid having 6 or less carbon atoms or a salt thereof was excellent in solubility, and also had a good elongation rate when formed into a film. The composition (slurry) using this electrode binder was excellent in coatability, and further, the non-aqueous electrolyte secondary battery using the electrode binder for a negative electrode plate was excellent in capacity retention rate.

**Claims**

**1.** A binder for non-aqueous electrolyte secondary battery electrodes, comprising:

Component A: a carboxymethyl cellulose having a degree of carboxymethyl substitution per anhydroglucose unit of 0.45 or more or a salt thereof; and
Component B: a saturated carboxylic acid having 6 or less carbon atoms or a salt thereof.

**2.** The binder for non-aqueous electrolyte secondary battery electrodes according to claim 1, wherein Component B contains at least a saturated carboxylic acid lithium salt having 6 or less carbon atoms.

**3.** The binder for non-aqueous electrolyte secondary battery electrodes according to claim 1 or 2, wherein Condition (I) shown below is satisfied:

Condition (I): when Component A is a carboxymethyl cellulose having a degree of carboxymethyl substitution of 0.45 or more and 1.0 or less or a salt thereof,
Component B is contained in a range of 1 to 100 parts by weight with respect to 100 parts by weight of Component A.

**4.** The binder for non-aqueous electrolyte secondary battery electrodes according to claim 1 or 2, wherein Condition (II) shown below is satisfied:

Condition (II): when Component A is a carboxymethyl cellulose having a degree of carboxymethyl substitution of more than 1.0 or a salt thereof,
Component B is contained in a range of 1 to 200 parts by weight with respect to 100 parts by weight of Component A.

**5.** The binder for non-aqueous electrolyte secondary battery electrodes according to any one of claims 1 to 4, wherein Component B is a hydroxylic acid lithium salt having 6 or less carbon atoms.

**6.** The binder for non-aqueous electrolyte secondary battery electrodes according to any one of claims 1 to 5, wherein Component B contains at least citric acid lithium salt.

**7.** The binder for non-aqueous electrolyte secondary battery electrodes according to any one of claims 1 to 6, wherein the carboxymethyl cellulose or a salt thereof has a volume cumulative 100% particle diameter of less than 100 um as measured by a laser diffraction/scattering particle size distribution meter using methanol as a dispersion medium.

**8.** The binder for non-aqueous electrolyte secondary battery electrodes according to claim 1, wherein the carboxymethyl cellulose or a salt thereof has a viscosity of a 1 mass% aqueous solution measured at 25°C with a B-type viscosity diameter (30 rpm) of 1,000 to 20,000 mPa·s.

**9.** The binder for non-aqueous electrolyte secondary battery electrodes according to claim 1 or 8, wherein the carboxymethyl cellulose or a salt thereof has a volume cumulative 100% particle diameter of less than 50 μm as measured with a laser diffraction/scattering particle size distribution meter using methanol as a dispersion medium.

**10.** The binder for non-aqueous electrolyte secondary battery electrodes according to any one of claims 1, 8 and 9, wherein the saturated carboxylic acid or a salt thereof is contained in a range of 10 to 120 wt% with respect to the carboxymethyl cellulose or a salt thereof.

**11.** The binder for non-aqueous electrolyte secondary battery electrodes according to any one of claims 1 to 10, wherein the carboxymethyl cellulose or a salt thereof has a ratio of a dry mass M to a dry mass m of less than 50 ppm, wherein the dry mass M is a dry mass of a residue on a filter after filtration measured when 2 liters of a 0.3 mass% aqueous solution of the carboxymethyl cellulose or a salt thereof having the dry mass m is prepared and filtered through a 250 mesh filter under a reduced pressure condition of -200 mmHg.

**12.** The binder for non-aqueous electrolyte secondary battery electrodes according to any one of claims 1 to 11, wherein the carboxymethyl cellulose or a salt thereof is a mechanically pulverized product.

**13.** An aqueous solution comprising the binder for non-aqueous electrolyte secondary battery electrodes according to any one of claims 1 to 12.

**14.** The aqueous solution according to claim 13 having a pH in a range of 2 to 8.

**15.** An electrode composition for non-aqueous electrolyte secondary batteries, comprising the aqueous solution according to claim 13 or 14.

**16.** The electrode composition for non-aqueous electrolyte secondary batteries according to claim 15, comprising a silicon-based active material.

**17.** An electrode for non-aqueous electrolyte secondary batteries, comprising the electrode composition according to claim 15 or 16.

**INTERNATIONAL SEARCH REPORT**

International application No. PCT/JP2021/019102

A. CLASSIFICATION OF SUBJECT MATTER
Int.Cl. C08K5/09(2006.01)i, C08L1/26(2006.01)i, H01M4/62(2006.01)i
FI: H01M4/62Z, C08L1/26, C08K5/09

According to International Patent Classification (IPC) or to both national classification and IPC

B. FIELDS SEARCHED

Minimum documentation searched (classification system followed by classification symbols)
Int.Cl. C08K5/09, C08L1/26, H01M4/62

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-210667 A (MITSUBISHI CHEMICAL CORPORATION) 20 October 2011 (2011-10-20), paragraphs [0010]-[0023], [0037], [0075]-[0087], example 2 | 1-6, 10-11, 13, 15-17<br>7-9, 12, 14 |
| Y | WO 2018/062250 A1 (NIPPON PAPER INDUSTRIES CO., LTD.) 05 April 2018 (2018-04-05), paragraphs [0019]-[0103] | 7-9, 12, 14 |
| A | JP 2012-89411 A (ZEON CORPORATION) 10 May 2012 (2012-05-10) | 1-17 |
| A | WO 2016/031449 A1 (DAI ICHI KOGYO SEIYAKU CO., LTD.) 03 March 2016 (2016-03-03) | 1-17 |
| A | WO 2017/145904 A1 (DAI ICHI KOGYO SEIYAKU CO., LTD.) 31 August 2017 (2017-08-31) | 1-17 |

☐ Further documents are listed in the continuation of Box C.

☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 03 August 2021 | 17 August 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/019102

| | | |
|---|---|---|
| JP 2011-210667 A | 20 October 2011 | (Family: none) |
| WO 2018/062250 A1 | 05 April 2018 | EP 3521318 A1<br>paragraphs [0016]-[0102]<br>CN 109790227 A<br>KR 10-2019-0045256 A |
| JP 2012-89411 A | 10 May 2012 | (Family: none) |
| WO 2016/031449 A1 | 03 March 2016 | US 2017/0256799 A1<br>EP 3187509 A1<br>CN 106573991 A<br>KR 10-2017-0046155 A |
| WO 2017/145904 A1 | 31 August 2017 | US 2019/0055323 A1<br>EP 3421501 A1<br>CN 108473594 A<br>KR 10-2018-0117611 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H574461 A
- JP 2003157847 A